# EUROPEAN PATENT APPLICATION

(11) **EP 3 333 378 A1**
(43) Date of publication of application: **13.06.2018**
(21) Application number: 17205090.8
(22) Date of filing: 04.12.2017
(51) Int. Cl.: F01D 25/16, F16B 39/34

(54) **NUT ANTI-ROTATION VIA AN INSERT**

(30) Priority: 06.12.2016 US 201615370622
(71) Applicant: United Technologies Corporation, Farmington, CT 06032 (US)
(72) Inventor: ANGLIN, Christopher T., Manchester, CT 06040 (US); CIGAL, Brian P., Windsor, CT 06095 (US)
(74) Representative: Gittins, Alex Michael

(57) **Abstract**

Aspects of the disclosure are directed to a system associated with a bearing compartment of an engine, comprising: a nut (308), and an insert (320) seated in a pocket (332) formed within an interior of the nut (308).

## Description

### BACKGROUND

Gas turbine engines, such as those which power aircraft and industrial equipment, employ a compressor to compress air that is drawn into the engine and a turbine to capture energy associated with the combustion of a fuel-air mixture.

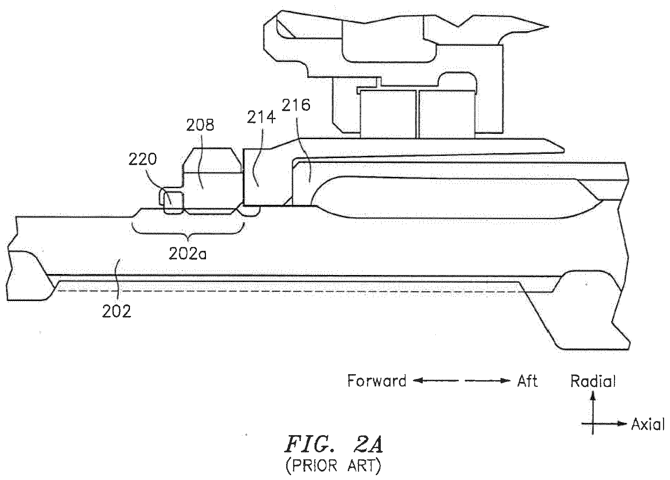

With reference to FIG. 2A, a bearing compartment, and associated bearings, provides support for one or more structures of the engine, such as for example a rotating shaft 202 of the engine. A typical bearing compartment may contain a spanner nut 208 that retains various components (e.g., a seal runner 214 and a spacer 216) in a stack, where thrust loads are transferred along an axial span of the components. The nut 208 is often anti-rotated so that it does not back off under typical operating conditions that an engine experiences. This can be done via the use of a deformable insert 220, which is typically made of plastic. The insert 220 engages with threads (denoted by reference character 202a) on the mating part (e.g., the shaft 202) and, as a result of friction, the nut 208 is prevented from rotating.

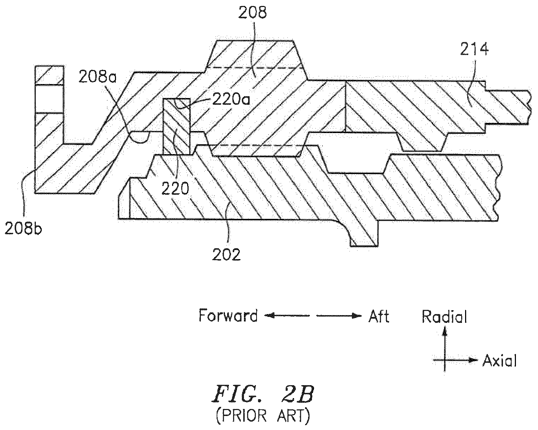

In some instances, the design of the nut 208 is such that it is not possible to install the insert 220 as shown in FIG. 2A. For example, and referring to FIG. 2B, such an installation would not be possible if the inner diameter (denoted by reference character 208a) of the nut where the insert 220 would otherwise be installed is smaller than/substantially radially inboard of the outer diameter (denoted by reference character 220a) of the insert 220. This may also happen where the nut 208 serves multiple purposes, such as anti-rotating adjacent components proximate reference character 208b in FIG. 2B.

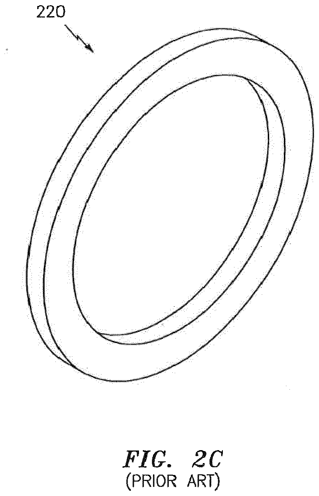

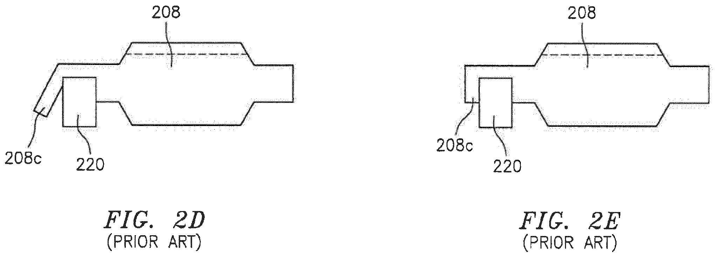

As shown in FIG. 2C, the insert 220 is typically formed as a ring/full-hoop structure. For purposes of assembly, the insert 220 is positioned in proximity to the nut 208 at the exterior of the nut 208 as shown in FIG. 2D, and then a tab 208c of the nut 208 is bent around a portion of the insert 220 as shown in the progression from FIG. 2D to FIG. 2E.

The insert 220 wears and deforms during installation, removal, and as the engine is operated. Eventually, the insert 220 would reach a degraded state/condition that would render the insert 220 ineffective. Because the nut 208 (e.g., the tab 208c) is permanently bent around the insert 220 during the assembly of the insert 220 and the nut 208 as shown in FIG. 2E, the entire nut 208 typically has to be discarded after one to three uses (e.g., at the end of the serviceable life of the insert 220). Given that the nut 208 is significantly more expensive than the insert 220, the need to discard of the nut 208 with the insert 220 represents a significant cost.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a system associated with a bearing compartment of an engine, comprising: a nut, and an insert seated in a pocket formed within an interior of the nut.

In some embodiments, the nut includes a hole formed in an inner diameter of the nut to receive the insert.

In some embodiments, the nut includes a second hole formed in an outer diameter of the nut for removing the insert.

In some embodiments, the nut includes a hole formed in an outer diameter of the nut to receive the insert.

In some embodiments, the insert includes a base and a stem.

In some embodiments, the base is substantially shaped as at least one of a button or a disc.

In some embodiments, the insert includes: a nose that engages a mating surface of the engine, a tooling feature that accommodates a tool, and a threaded body disposed between the nose and the tooling feature.

In some embodiments, the threaded body includes first threads that mate with second threads of a shoulder region of the nut.

In some embodiments, the nut includes a hole formed in an outer diameter of the nut, and the hole accommodates the tool.

In some embodiments, the insert is made of plastic.

In some embodiments, the system further comprises a second insert seated within a second pocket formed within the interior of the nut.

In some embodiments, the system further comprises: a shaft of the engine, where the shaft includes threads that mate with the insert to prevent the nut from rotating.

Aspects of the disclosure are directed to a method comprising: seating an insert in a pocket formed within an interior of a nut of an engine, operating the engine subsequent to seating the insert in the pocket, removing the insert from the pocket subsequent to operating the engine, and seating a second insert in the pocket subsequent to removing the insert from the pocket.

In some embodiments, the method further comprises: installing the nut on the engine prior to operating the engine.

In some embodiments, the method further comprises: pre-deforming the insert by running the nut over a threaded mandrel prior to the installation of the nut on the engine.

In some embodiments, the insert is seated in the pocket prior to the installation of the nut on the engine.

In some embodiments, the method further comprises: removing the nut from the engine prior to removing the insert from the pocket.

In some embodiments, the method further comprises: installing the nut on the engine subsequent to seating the second insert in the pocket.

### BRIEF DESCRIPTION OF THE DRAWINGS

The present disclosure is illustrated by way of example and not limited in the accompanying figures in which like reference numerals indicate similar elements. The drawing figures are not necessarily drawn to scale unless specifically indicated otherwise.
FIG. 1 is a side cutaway illustration of a geared turbine engine.
FIG. 2A illustrates an insert installed with respect to a shaft and a nut in accordance with the prior art.
FIG. 2B illustrates complications in installing an insert in accordance with the prior art.
FIG. 2C illustrates a prior art insert.
FIGS. 2D-2E illustrate a prior art sequence for installing an insert with respect to a tab of a nut.
FIG. 3A illustrates an insert in accordance with aspects of this disclosure.
FIG. 3B illustrates the insert of FIG. 3A seated within a pocket formed within an interior of a nut.
FIG. 3C illustrates a plurality of the inserts of FIG. 3A seated within respective pockets formed within an interior of a nut.
FIG. 4A illustrates an insert in accordance with aspects of this disclosure.
FIG. 4B illustrates the insert of FIG. 4A seated within a pocket formed within an interior of a nut.
FIG. 4C illustrates the insert of FIG. 4A seated within a pocket formed within an interior of a nut.
FIG. 5 illustrates a flow chart of an exemplary method for maintaining inserts in conjunction with a nut.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

Aspects of the disclosure are directed to apparatuses, systems, and methods associated with a bearing compartment. In some embodiments, a nut includes one or more pockets/receptacles that seat respective one or more of inserts. A first insert may be removed from a pocket and a second, substitute insert may be installed in place of the first insert. In some embodiments, the insert may be formed as a button-style insert. In some embodiments, the insert may include one or more threads that may engage (one or more threads of) the nut and the insert may include a tooling feature/interface to accommodate installation or removal of the insert.

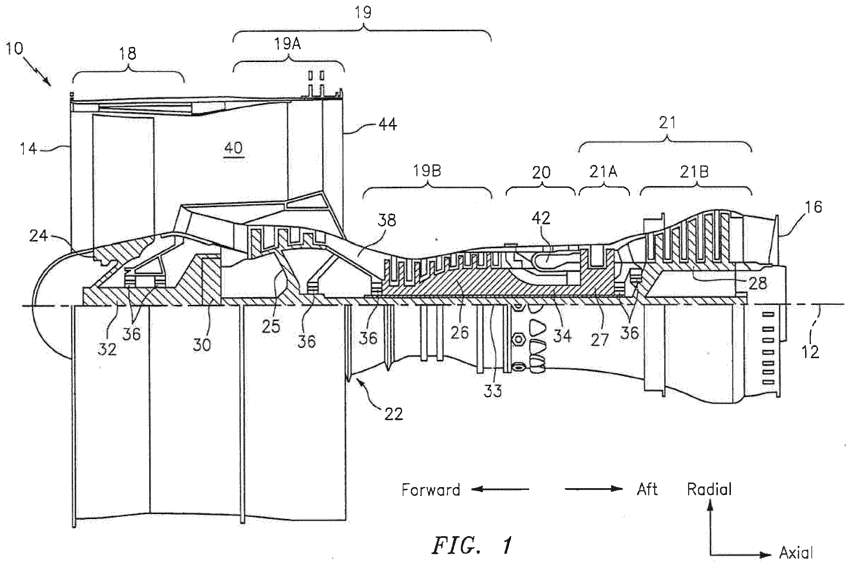

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

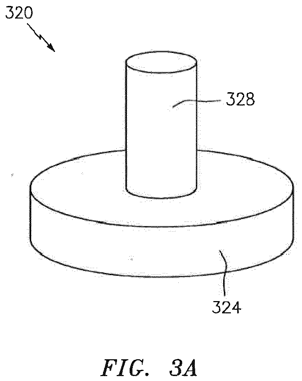

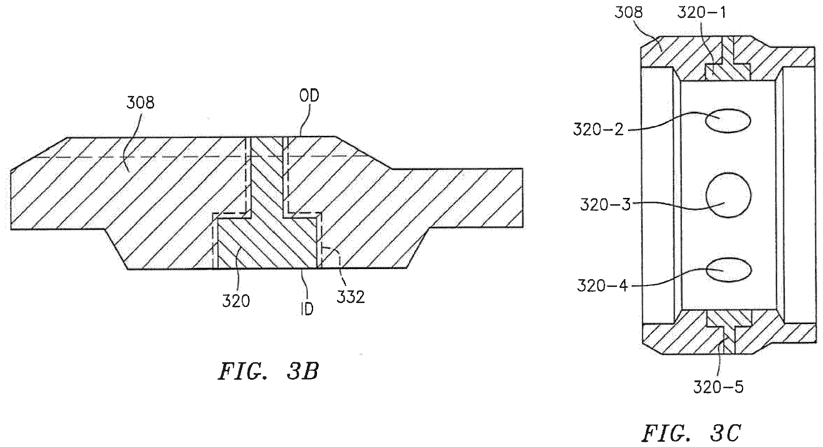

As described above, inserts and nuts are frequently used in conjunction with the bearing system/bearings 36. Referring to FIG. 3A, an insert 320 in accordance with aspects of this disclosure is shown. The insert 320 may be made of one or more materials (e.g., plastic) and may be manufactured to include a base 324 and a stem 328. The base 324 may be disc/button-like in shape as shown in FIG. 3A, although other form factors/shapes may be used in some embodiments. The stem 328 may be used for purposes of handling the insert 320 and may provide a surface for a technician/operator to pull or push the insert 320 out of a nut (e.g., nut 308 - see FIG. 3B) as described further below.

FIG. 3B illustrates the insert 320 seated in a pocket (where the pocket is denoted by dashed lines 332) formed within an interior of the nut 308. As reflected in conjunction with FIGS. 3B-3C, around the inner diameter (ID) of the nut 308 there may be multiple pockets, where each of the pockets may seat a respective insert (e.g., insert 320-1, 320-2, 320-3, 320-4, 320-5). The inserts 320-1 through 320-5 may deform to the threads of an adjacent mating surface, e.g., the outer surface of a shaft of an engine, when the nut 308 and the inserts 320-1 through 320-5 are installed on the shaft.

While five pockets/inserts are shown in conjunction with FIGS. 3B-3C, any number of pockets/inserts may be included. The particular count of pockets (or analogously, inserts), that may be used may be determined based on the total frictional engagement area that may be needed between the inserts and the mating surface, e.g., the outer surface of the shaft of the engine.

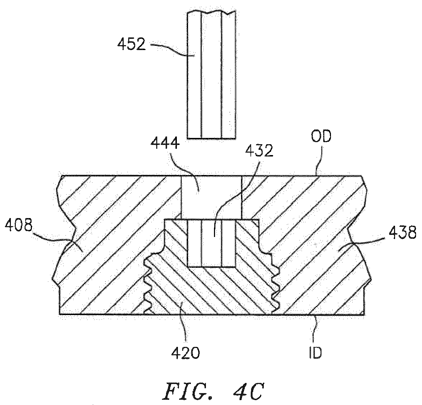

Once an insert (e.g., insert 320-1) has reached the end of its service life, the insert may be pushed/pulled out of a hole formed in the outer diameter (OD) of the nut 308 (see FIG. 4C for an example of a hole 444 formed in an outer diameter of a nut) and a substitute insert may be reinstalled through the associated hole located at the inner diameter (ID) of the nut 308. Thus, the hole(s) may serve as an access point with respect to interfacing the insert and the nut 308. Furthermore, the ability to provide/use a substitute insert decouples the service life of the nut 308 from the service life of the inserts 320.

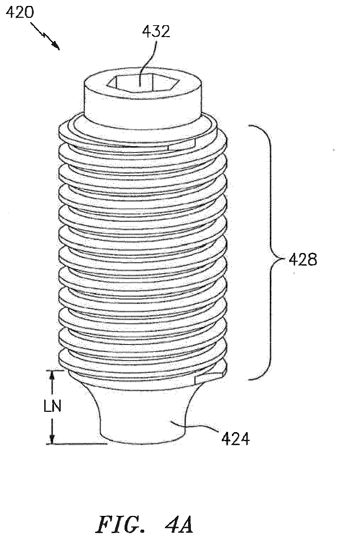

Referring now to FIG. 4A, an insert 420 in accordance with aspects of this disclosure is shown. The insert 420 may be made of one or more materials (e.g., plastic). The insert 420 may include a nose 424, a body 428, and a tooling feature 432. At least a portion (e.g., the lower-most portion in FIG. 4A) of the nose 424 may engage the corresponding mating surface (e.g., an outer surface of a shaft) of the engine. The body 428, which may be disposed between the nose 424 and the tooling feature 432, may include threads that may engage (threads of) a shoulder region of a nut (see FIG. 4C for an example of a shoulder region 438 of a nut). The tooling feature 432 may accommodate/seat a tool for purposes of installing or removing the insert from a nut as described further below.

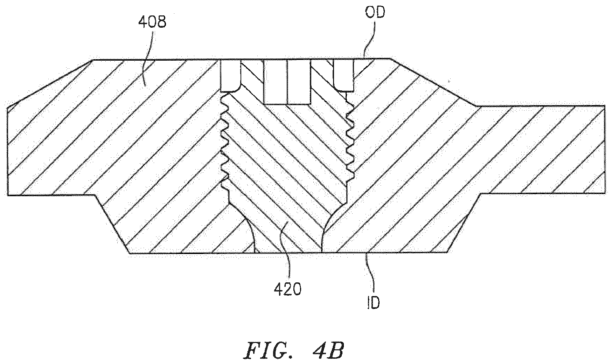

As shown in FIG. 4B, the insert 420 may be threaded into a nut 408 from the outer diameter (OD) of the nut 408. Alternatively, the insert 420 may be threaded into the nut 408 from the inner diameter (ID) of the nut 408 as shown in FIG. 4C. While a single instance of the insert 420 is shown in FIGS. 4A-4C, the insert 420 may be replicated as part of a plurality of inserts/pockets similar to what is described above with respect to FIG. 3C.

With reference to FIG. 4C, the outer diameter (OD) of the nut 408 may include a hole 444 formed therein. The hole 444 may provide access to the insert 420 for purposes of inserting or removing the insert 420 relative to the nut 408. For example, a tool 452 (e.g., a keyed tool) may be seated within the tooling feature 432 and rotated as part of the insertion or removal of the insert 420.

As described above in relation to FIG. 4A, the nose 424 may engage, e.g., the shaft of an engine. With reference to FIGS. 4A-4C, the fraction of the total length (LN) of the nose 424 that is exposed to, e.g., the shaft (e.g., the portion of the nose 424 that extends radially inward towards the shaft beyond the inner diameter (ID) of the nut 408) may be based on a trade-off between: (1) wanting the nose 424 exposed to the shaft in order to engage teeth of the shaft on the one hand, and (2) avoiding exposing too much of the nose 424 to the shaft in order to avoid imposing excessive shear forces on the insert 420 at/proximate the inner diameter (ID) interface on the other hand.

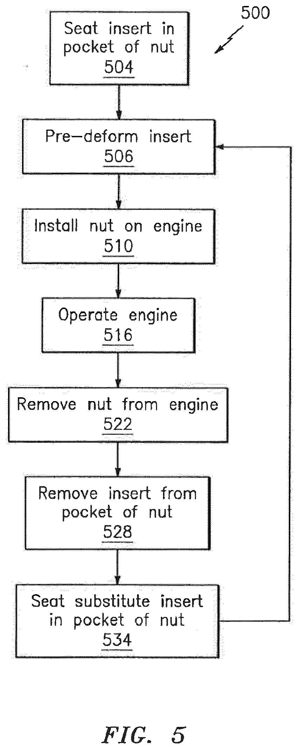

Referring to FIG. 5, a flow chart of an exemplary method 500 is shown. The method 500 may be executed in conjunction/association with a nut and an insert, such as the nuts and inserts described herein. At least a portion of the method 500 may be executed periodically, potentially as part of a maintenance/service activity.

In block 504, an insert may be seated within a pocket of a nut.

In block 506, the insert may be pre-deformed by running the assembled nut over a threaded mandrel. The mandrel may start the process of forming threads into the face of the insert to bring the installation torque to within requirements.

In block 510, the nut (and insert) may be installed on an engine.

In block 516, the engine may be operated.

In block 522, the nut (and insert) may be removed from the engine. Such removal may be based on a specification of a lifetime associated with the insert.

In block 528, the insert may be removed from the pocket of the nut. For example, the insert may be removed from a hole formed at the inner diameter (ID) or the outer diameter (OD) of the nut.

In block 534, an insert may be seated in the pocket of the nut. The insert that is seated in the pocket in block 534 may serve as a substitute/replacement for the insert that was removed from the pocket in block 528. This substitute/replacement insert may be installed via a hole formed at the ID or the OD of the nut.

From block 534, flow may proceed back to, e.g., block 506.

The method 500 is illustrative. In some embodiments, one or more of the blocks may be optional. In some embodiments, the blocks may execute in an order/sequence that is different from what is shown in FIG. 5.

Technical effects and benefits of this disclosure include a dramatic reduction in the cost of providing anti-rotation capabilities with respect to a nut of an engine. In some embodiments, a nut may include one or more holes that may be formed at an inner diameter and/or an outer diameter of the nut. Such a hole may accommodate an insertion or removal of an insert into or from the nut, such that the insert may be seated within a pocket formed within an interior of the nut. When the useable service life of a first insert has expired (which may be based on a total operating time of an engine between service/maintenance activities, a specification associated with the insert, etc.), the first insert may be removed from a nut and a second insert may be inserted into that same nut to serve as a substitute/replacement for the first insert. In this manner, a service life of a nut has been decoupled from a service life of an insert. Such a decoupling may represent significant savings in terms of cost, given that the cost (in terms of e.g., materials, process, reliability, etc.) of a nut is typically orders of magnitude greater than the cost of an insert.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A system associated with a bearing compartment of an engine (10), comprising:
a nut (308;408); and
an insert (320;420) seated in a pocket (332) formed within an interior of the nut (308;408).

2. The system of claim 1, wherein the nut (308;408) includes a hole formed in an inner diameter (ID) of the nut (308;408) to receive the insert (320;420).

3. The system of claim 2, wherein the nut (308;408) includes a second hole (444) formed in an outer diameter (OD) of the nut (308;408) for removing the insert (320;420).

4. The system of claim 1, wherein the nut (308;408) includes a hole (444) formed in an outer diameter (OD) of the nut (308;408) to receive the insert (320;420).

5. The system of any preceding claim, wherein the insert (320;420) includes a base (324) and a stem (328), wherein, optionally, the base (324) is substantially shaped as at least one of a button or a disc.

6. The system of any preceding claim, wherein the insert includes:
a nose (424) that engages a mating surface of the engine (10);
a tooling feature (432) that accommodates a tool (452); and
a threaded body (428) disposed between the nose (424) and the tooling feature (432).

7. The system of claim 6, wherein the threaded body (428) includes first threads that mate with second threads of a shoulder region (438) of the nut (408).

8. The system of claim 6 or 7, wherein the nut (408) includes a or the hole (444) formed in an outer diameter (OD) of the nut (408), and wherein the hole (444) accommodates the tool (452).

9. The system of any preceding claim, wherein the insert (320;420) is made of plastic.

10. The system of any preceding claim, further comprising:
a second insert (320-1,2,3,4,5) seated within a second pocket formed within the interior of the nut (308;408).

11. The system of any preceding claim, further comprising:
a shaft (32;33;34) of the engine (10),
wherein the shaft (32;33;34) includes threads that mate with the insert (320;420) to prevent the nut (308;408) from rotating.

12. A method comprising:
seating an insert (320;420) in a pocket (332) formed within an interior of a nut (308;408) of an engine (10);
operating the engine (10) subsequent to seating the insert (320;420) in the pocket (332);
removing the insert (320;420) from the pocket (332) subsequent to operating the engine (10); and
seating a second insert (320;420) in the pocket (332) subsequent to removing the insert (320;420) from the pocket (332).

13. The method of claim 12, further comprising:
installing the nut (308;408) on the engine (10) prior to operating the engine (10); and, optionally,
pre-deforming the insert (320;420) by running the nut (308;408) over a threaded mandrel prior to the installation of the nut (308;408) on the engine (10).

14. The method of claim 13, wherein the insert (320;420) is seated in the pocket (332) prior to the installation of the nut (308;408) on the engine (10).

15. The method of any of claims 12 to 14, further comprising:
removing the nut (308;408) from the engine (10) prior to removing the insert (320;420) from the pocket (332); and, optionally,
installing the nut (308;408) on the engine (10) subsequent to seating the second insert (320;420) in the pocket (332).
